# EUROPÄISCHE PATENTANMELDUNG

(11) **EP 0 921 602 A1**
(43) Veröffentlichungstag der Anmeldung: **09.06.1999**
(21) Anmeldenummer: 98106687.1
(22) Anmeldetag: 11.04.1998
(51) Int. Cl.: H01R 13/56, H01R 4/30, B60M 5/02

(54) **Kabelschuh für einen elektrischen Leiter**

(30) Priorität: 05.12.1997 IT MI972693
(71) Anmelder: CEMBRE S.p.A., I-25135 Brescia (IT)
(72) Erfinder: De Vecchi, Giovanni, 25030 Roncadelle (BS) (IT)
(74) Vertreter: Mayer, Hans Benno, Dipl.-Ing.

(57) **Zusammenfassung**

Kabelschuh (1) für einen elektrischen Leiter (2) der unter Zuhilfenahme einer Schraubverbindung (7) montierbar ist, wobei dem Kabelschuh (1) ein elastischer und Z-förmig ausgebildeter Bügel (6) zugeordnet ist und der elastische Bügel (6) eine Grundplatte (15) aufweist, die zwischen der Anschlußzunge (5) des Kabelschuhes (1) und der Mutter (10) der Schraubverbindung (7) angeordnet ist, wobei von der Grundplatte (15) ein Hebelarm (19) absteht, der elastisch verformbar ausgebildet ist und der Hebelarm (19) in eine Gegendruckplatte (20) übergeht, die vorspannbar ausgebildet ist und am rohrförmigen Körper (3) des Kabelschuhes (1) anliegt.

## Beschreibung

Die vorstehende Erfindung betrifft einen Kabelschuh für einen elektrischen Leiter, der unter Zuhilfenahme einer Schraubverbindung mit einer elektrisch leitenden Kontaktfläche, z.B. mit einer am Steg eines Schienenkörpers angebrachten Kontakthülse verbindbar ist.

Es ist bekannt, daß Kabelschuhe, besonders solche, die für den Anschluß elektrischer Leiter am Steg eines Schienenkörpers verwendet werden, starken Schwingungen und Wechselbelastungen z.B. während des Vorbeifahrens eines Zuges ausgesetzt sind.

Bei besonderen Fällen des Schienenmateriales, z.B. in der Nähe von Weichen und aufgrund hin- und hergehender Bewegungen des Schienenkörpers beim Vorbeifahren eines Zuges, entstehen erhebliche Belastungen für den Kabelschuh und den elektrischen Leiter, besonders am Einlauf des Kabelschuhes, denn diese Bauteile stellen das Verbindungsstück zwischen den beweglichen Schienenteilen und dem elektrischen Leiter dar. Der elektrische Leiter ist auf Schotter gelagert oder an den Schwelen der Eisebahnlinie befestigt.

Für den Fall daß der Kabelschuh und der zugehörige elektrische Leiter nicht einwandfrei montiert wurden und der Kabelschuh nicht zur Längsachse des Schienenkörpers ausgerichtet wurde oder der elektrische Leiter des Kabelschuhes eine freie Länge über dem Schotterbett aufweist und eine aufschlagende Bewegung des elektrischen Leiters auf den Schotterbett erfolgen kann, treten weitere unerwünschte Belastungen am Einlauf des Kabelschuhes auf.

Diese übermäßigen Belastungen konzentrieren sich meistens auf die steifer ausgebildeten Bauteile des elektrischen Anschlusses sowie des Kabelschuhes. Dies führt zu einer Konzentration der Belastung am Ende des elektrischen Leiters und am Eintritt in die Aufnahme des Kabelschuhes, da an dieser Stelle zwischen dem elektrischen Leiter und dem Kabelschuh eine betonte Richtungsänderung eintritt. Diese starke Belastung tritt besonders an der Übergangsstelle auf, an der der rohrförmig ausgebildete Körper des Kabelschuhes, der für die Aufnahme des elektrischen Leiters benötigt wird, in die laschenförmig und eben ausgebildete Verlängerung des Kabelschuhes übergeht.

Es ist allgemein bekannt, daß eine schroffe Richtungsänderung im Körper des Kabelschuhes, besonders im Verbindungspunkt des rohrförmigen Bauteiles mit der flach ausgebildeten Anschlußzunge, zu einer Konzentration der Kraftflußlinien bei Belastung (Schereffekt) eintritt und an dieser Stelle eine Materialermüdung eintritt die zu einem Bruch des Kabelschuhes führt.

Die hin- und hergehenden Schwingbewegungen des Schienenkörpers sowie das Aufschlagen des elektrischen Leiters auf dem Schotterbett, können auch zu einem Lösen der Befestigungsmutter führen, die für die Montage des Kabelschuhes an einer den Schienensteg durchdringenden Hülse vorgesehen ist.

Ein Lösen der Spannmutter des Kabelschuhes führt zu Störungen bei der Signalübertragung entlang der Eisenbahnlinie. Ein Bruch des Kabelschuhes oder eine Beschädigung des Verbindungsstückes des elektrischen Leiters würde sogar zu einer Unterbrechung der elektrischen Verbindung führen und eine unerwünschte Störung entlang der gesamten Eisenbahnlinie hervorrufen, was zu einem Anhalten der reisenden Züge führen würde.

Zur Zeit werden für den Anschluß elektrischer Leiter der beschriebenen Art besonders ausgebildete Kabelschuhe verwendet, die aus einem Vollmaterial bestehen, das spanabhebend bearbeitet wurde. Diese Kabelschuhe weisen vergrößerte Abmessungen in den Übergangsbereichen zwischen dem rohrförmigen Bauteil und der flachen Anschlußzunge auf. Derartige Kabelschuhe können den auftretenden mechanischen Belastungen für längere Zeit standhalten, sie haben aber den Nachteil, daß sie einen sehr hohen Materialbedarf haben und zeitaufwendig bei der Herstellung des Kabelschuhes sind.

Ferner ist für die Montage dieser bekannten Kabelschuhe die Verwendung von eigens dafür konstruierten Werkzeugen und Einrichtungen erforderlich.

Die bekannte Ausführungsform des Kabelschuhes hat ferner den Nachteil, daß der massiv ausgebildete Körper des Kabelschuhes ein sehr starres Verbindungsteil zwischen dem Schienenkörper und dem elektrischen Leiter darstellt. Dies führt dazu, daß der bekannte, langlebige Kabelschuh aufgrund seiner Steifigkeit an der Verbindungsstelle, eine große Energiemenge während der unvermeidlichen Schwingbewegungen des Schienenkörpers direkt auf den elektrischen Leiter überträgt. Somit entsteht ein Schwachpunkt in dem aus elektrischem Leiter und Kabelschuh gebildeten Verbindungssystem. Es wird auf den elektrischen Leiter ein Großteil der mechanischen Belastungen übertragen und dies führt zu einer allmählichen Beschädigung des elektrischen Leiters am Ausgang des Kabelschuhes.

Die bekannte Ausführungsform des Kabelschuhes ist daher nicht in der Lage die beschriebenen Störungen entlang einer Schienenstrecke zu vermeiden.

Ferner kann durch Verwendung überdimensionierter und aus Vollmaterial bestehender Kabelschuhe ein Lösen der Befestigungsmutter, aufgrund von Schwingbewegungen oder Rattererscheinungen am Schienenkörper aufgrund vorbeifahrender Züge nicht vermieden werden.

Bei bekannten Ausführungsbeispielen wird ein unerwünschtes Lösen der Befestigungsmutter durch Verwenden besonderer selbsblockierender Muttern gelöst, diese haben aber den Nachteil, daß sie einen wesentlich aufwändigeren technischen Aufbau als herkömmliche Muttern haben.

Aufgabe der vorstehenden Erfindung ist es die genannten Nachteile des Standes der Technik zu vermeiden und einen Kabelschuh vorzuschlagen mit dem eine größere Widerstandsfähigkeit des Kabelschuhes gegen mechanische Belastungen ereicht wird. Dabei soll der vorgeschlagene Kabelschuh einen einfachen Aufbau aufweisen und in Großserienfertigung hergestellbar sein und einfach und ohne den Einsatz besonderer Vorrichtungen und Werkzeuge montierbar sein.

Die erfindungsgemäße Aufgabe wird mit einem Kabelschuh zur Aufnahme eines elektrischen Leiters, der unter Verwendung einer Schraubverbindung montierbar ist, dadurch gelöst, daß dem Kabelschuh ein elastischer Z-förmiger Bügel zugeordnet ist, daß der elastische Bügel eine Grundplatte aufweist, die zwischen der Anschlußlasche des Kabelschuhes und der Befestigungsmutter der Schraube angeordnet ist, daß von der Grundplatte des Bügels ein elastisch verformbarer Hebelarm absteht und der Hebelarm in eine vorspannbare Druckplatte übergeht, die am rohrförmigen Körper des Kabelschuhes anliegt.

Der elastische Bügel weist derartige Form auf, daß er dem Verlauf des Übergangsteiles des Kabelschuhes, welches die flache Anschlußlasche mit dem rohrförmigen Körper verbindet, folgt.

Befindet sich der elastische Bügel in entspannter Lage, d.h. bei nicht angezogener Mutter, so liegt der Bügel am Körper des Kabelschuhes an dessen freiliegenden Querrändern an, wobei die Gegendruckplatte in nicht gespanntem Zustand am rohrförmigen Körper des Kabelschuhes anliegt.

Sobald die Mutter angezogen wird und dadurch die Grundplatte elastisch verformt wird und an der Anschlußlasche des Kabelschuhes anliegt, wird über den Hebelarm die Kontaktplatte vorgespannt um schlüßig am rohrförmigen Körper des Kabelschuhes zur Anlage zu kommen.

Der elastische Bügel ist derartig ausgebildet, daß bei angezogener Mutter eine Beaufschlagung durch die Druckplatte erfolgt, wodurch eine kraftschüssige Verbindung mit dem rohrförmigen Körper eintritt und eine teilweise Übertragung der auftretenden Belastung der schwingenden Schiene auf den rohrförmigen Körper und somit an den elektrischen Leiter erfolgt.

Um eine feste Anordnung und ein Vorspannen des elastischen Bügels zu erreichen um dadurch einem Lösen der Kontaktplatte vom rohrförmigen Körper während der Übertragung von Schwingungen entgegenzutreten, weist die Grundplatte eine Bohrung auf, die eine Schraube aufnimmt, auf die eine Mutter aufgesetzt ist.

Um eine schnelle Montage des elastischen Bügels zwischen Spannmutter und Anschlußlasche zu ermöglichen, weist die Grundplatte zwei Längserstreckungen auf, die Y-förmig ausgebildet sind und eine seitlich offene Ausnehmung schaffen in die der Schraubenschaft der die Mutter aufnimmt, einfügbar ist.

Um eine Gegenreaktion auf den Schraubenschaft ausüben zu können, die ausreichend sein muß um die Gewindeflanken der Schraube über die Gewindeflanken der Mutter zu belasten, und dadurch ein Lösen der Mutter zu vermeiden, ist die Grundplatte in vorteilhafter Weise konvex ausgebildet, wobei die konvex gebogene Seite zur Anschlußlasche des Kabelschuhes gerichtet ist.

Um auf einfache Weise der Grundplatte die erfoderliche konkave Formgebung zu verleihen, ist vorgesehen die Grundplatte in Querrichtung V-förmig zu verformen, wobei die konkave Fläche zur Anschlußzunge des Kabelschuhes gerichtet ist.

Um die Kontaktplatte fest mit dem Rohrkörper des Kabelschuhes beim Verspannen der Schraube in Verbindung zu bringen und die Platte gegen den rohrförmigen Körper zu drücken und dadurch ein Lösen während der Übertragung von Schwingbewegungen zu vermeiden, wird vorgeschlagen, die vorspannbare Platte mit einer sich in Querrichtung erstreckenden Krümmung zu versehen, die den rohrförmigen Körper teilweise umgibt.

Um den rohrförmigen Körper des Kabelschuhes kraftschlüssig mit der Platte zu umgreifen, weist die vorspannbare Platte eine oval ausgebildete Ausnehmung auf, die den rohrförmigen Körper des Kabelschuhes umgibt. Um die vorspannbare Platte mit den gegenüberliegenden Seiten des rohrförmigen Körpers bei Anziehen der Mutter zu verbinden, weist die vorspannbare Platte eine sich in Längsrichtung erstreckende Wölbung auf und die konkave Seite der Wölbung ist zum Ende des rohrförmigen Körpers gerichtet, der den elektrischen Leiter aufnimmt.

In vorteilhafter Weise, um einfach die Krümmung der vorspannbaren Platte herstellen zu können, ist die vorspannbare Platte in Querrichtung V-förmig gebogen, wobei die konkave Seite auf das Endstück des rohrförmigen Körpers zur Aufnahme des elektrischen Leiters gerichtet ist.

Um eine einwandfrei elastische Verformung zu gewährleisten und die notwendige Vorspannung und eine lange Lebensdauer auch bei wechselnder Belastung zu erreichen, ist der elastische Bügel in vorteilhafter Weise aus Federstahl hergestellt.

Die wesentlichen Vorteile, die mit der Erfindung erzielbar sind, bestehen darin, daß durch Verwendung eines elastischen Bügels die Widerstandsfähigkeit des Kabelschuhes gegenüber mechanischen Belastungen wesentliche verbessert werden, und Belastungen, die beim Durchfahren eines Zuges auf den Schienenkörper übertragen werden, in vorteilhafter Weise von dem elastischen Bügel zum großen Teil aufgenommen werden.

Der dem Kabelschuh zugeordnete elastische Bügel erlaubt es eine Gesamtvorrichtung zu schaffen, mit der die auftretenden mechanischen Belastungen zu einem Großteil auf das Endstück des Kabelschuhes übertragen werden um dadurch einem Bruch des Kabelschuhes an den Übergängen zu vermeiden.

Auf diese Weise wird die Lebensdauer des Kabelschuhes erheblich verlängert.

Es hat sich ferner als vorteilhaft erwiesen, daß der elastische Bügel nicht durch eine Schweißverbindung mit dem Kabelschuh verbunden ist.

Gemäß der Erfindung ist vogesehen, daß zwischen dem elastischen Bügel und dem Kabelschuh kleine Verschiebebewegungen möglich sind, und auftretende Energieformen in Reibungsenergie umgewandelt werden, und die vom Kabelschuh und dem, elastischen Bügel an den Leiter übertragene Belastungen vermindert werden.

Ein weiterer Vorteil der Erfindung ist darin zu sehen, daß der elastische Bügel eine Verteilung der die Mutter auf den Kabelschuh übertragenen Kräfte erlaubt. Dies führt zu einer verbesserten elektrischen Verbindung zwischen dem Kabelschuh und der Anschlußplatte oder der mit der Anschlußplatte in Verbindung stehenden Kontakthülse.

Es hat sich ferner als besonderer Vorteil erwiesen, daß der elastische Bügel eine nicht steife Verbindung zwischen der Befestigungsschraube und dem rohrförmig ausgebildeten Körper des Kabelschuhes bildet. Die besondere Formgebung des elastischen Bügels, unter Vorsehung einer Grundplatte, eines angeformten Hebelarmes, sowie einer Gegendruckplatte stellt ein Bauteil dar, dessen Steifigkeit mit zunehmendem Abstand vom Anschlußteil des Kabelschuhes abnimmt.

Die Zuordnung des elastischen Bügels zum Kabelschuh, ermöglicht es die mechanischen Belastungen in den Übergangszonen vom rohrförmigen Körper des Kabelschuhes zur Anschlußlasche desselben zu vermindern, ohne dabei eine übermäßige Versteifung dieser Anschlußstelle zu bewirken.

Es hat sich als weiterer Vorteil erwiesen, daß der elastische Bügel, der zwischen der aufgeschraubten Mutter und dem Kabelschuh angeordnet ist, jegliches Montagagespiel aufnimmt und die Mutter sowie den Kabelschuh mit einer Vorspannkraft beaufschlagt.

Aufgrund der eintretenden Vorspannung, die auf die Mutter, dank der besonderen Ausbildung der Grundplatte übertragen wird, ist es möglich das bestehende Spannmoment über die Zeit aufrecht zu erhalten. Dadurch wird ein Lösen der Mutter aufgrund eintretender Schwingungen, z.B. beim Vorbeifahren eines Zuges, vermieden.

Ein weiterer Vorteil der Erfindung besteht darin, daß der elastische Bügel ein sehr einfaches Bauteil darstellt, das einfach in Serie hergestellt werden kann und für die Montage keine besonderen Vorrichtungen oder Werkzeuge benötigt.

In vorteilhafter Weise ermöglicht die erfindungsgemäße Lösung auch eine Montage an bereits montierten Kabelschuhen, die bereits an einem Schienenkörper befestigt sind.

Der Erfindungsgegenstand wird nun genauer beschrieben und anhand eines Ausführungsbeispieles in den beigefügten Zeichnungen dargestellt.
Figur 1 zeigt in Seitenansicht, teilweise im Schnitt, einen Kabelschuh zusammen mit einem elastischen Bügel, der einen elektrischen Leiter mit den Steg eines Schienenkörpers verbindet, wobei der elektrische Leiter um ungefähr 45° gegenüber dem Schienenkörper geneigt ist;
Figur 2 und 3 zeigen in Draufsicht und in Seitenansicht den elastischen Bügel nach Figur 1;
Figur 4 zeigt in einer Seitenansicht teilweise im Schnitt einen geraden Kabelschuh dem ein elastischer Bügel zugeordnet ist;
Figur 5 und 6 zeigen in Draufsicht und in Seitenansicht sowie teilweise im Schnitt, den elastischen Bügel nach Figur 4;
Figur 7 zeigt in einer Seitenansicht und teilweise im Schnitt einen Kabelschuh mit einem elastischen Bügel, zum Montieren eines elektrischen Leiters unter einem Winkel von ungefähr 90° am Steg eines Schienenkörpers;
Figur 8 und 9 zeigen in Draufsicht und in Seitenansicht, teilweise im Schnitt, den elastischen Bügel nach Figur 7;
Figur 10, 11 und 12 veranschaulichen schematisch mittels einer Seitenansicht die Wirkungsweise des elastischen Bügels, zusammen mit einem Kabelschuh, der in verschiedenen Winkelstellungen angeordnet ist.

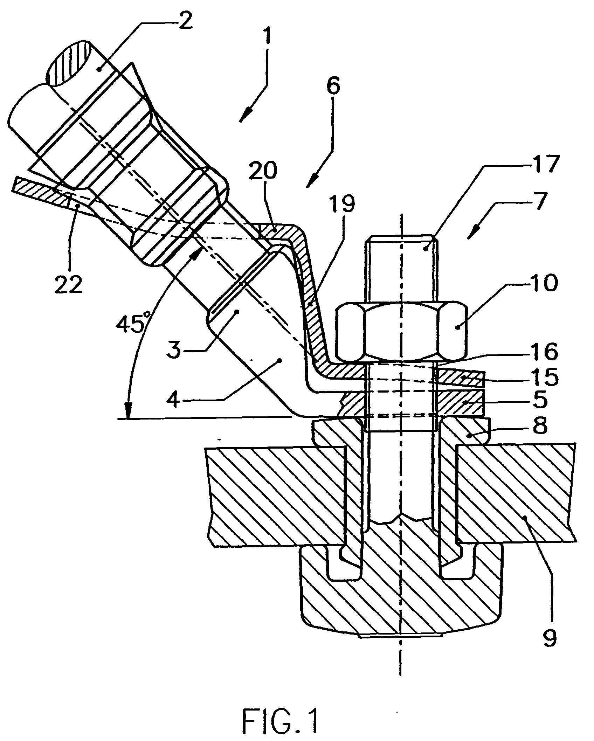

Wie den Figuren 1, 4 und 7 zu entnehmen ist wird ein gesamthaft mit 1 gekennzeichneter Kabelschuh an einem Ende eines elektrischen Leiters 2 in bekannter Weise befestigt.

Der Kabelschuh 1 weist einen rohrförmigen Körper 3 auf, in den das Ende des elektrischen Leiters 2 eingesetzt und befestigt wird.

Der rohrförmige Körper 3 des Kabelschuhes 1 geht über ein Verbindungsstück 4 in eine Anschlußlasche 5 über.

Je nach Winkellage mit der sich der elektrische Leiter von der Ebene des Schienenkörpers (Befestigungswinkel des elektrischen Leiters) entfernt, wird dem Übergangsbereich 4 eine unterschiedliche Kröpfung gegenüber der Anschlußlasche 5 verliehen.

Der Figur 1 kann z.B. entnommen werden, daß der Kabelschuh 1 den elektrischen Leiter unter einem Winkel von 45° aufnimmt.

Der Anschlußwinkel des elektrischen Leiters wird zwischen der Ebene des Schienensteges im Uhrzeigersinn bis zur Achse des rohrförmigen Körpers gemessen.

Selbstverständlich kann dieser Winkel auch im Gegenuhrzeigersinn gemessen werden, in diesem Falle würde ein Anschlußwinkel von 135° für den Kabelschuh nach Figur 1 gemessen werden.

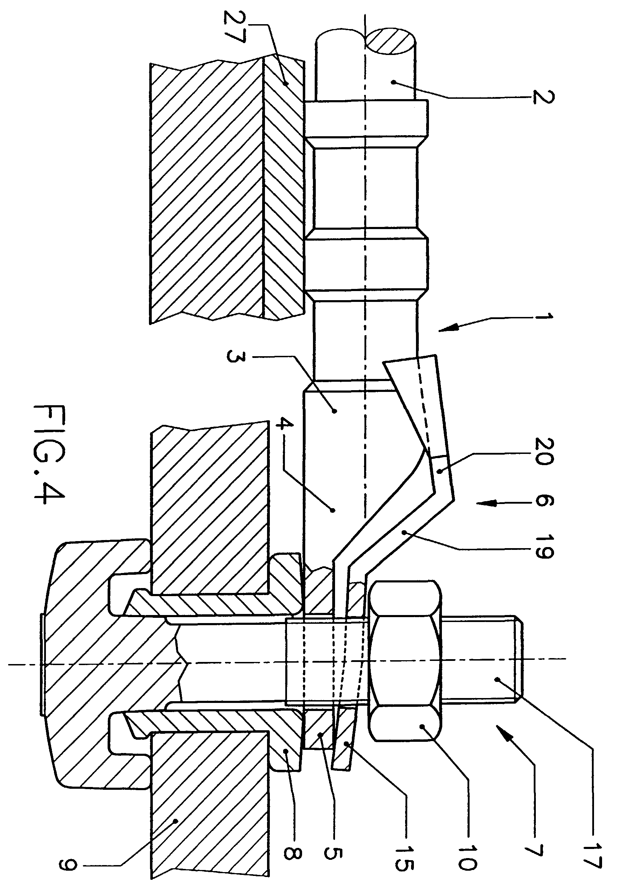

Der Figur 4 kann ein flach ausgebildeter Kabelschuh 1 entnommen werden, bei dem der rohrförmige Körper 3 und das Ende des elektrischen Leiters 2 das mit dem Kabelschuh 1 verbunden ist, parallel zur Ebene des Schienensteges angeordnet ist (gerade ausgebildeter Kabelschuh).

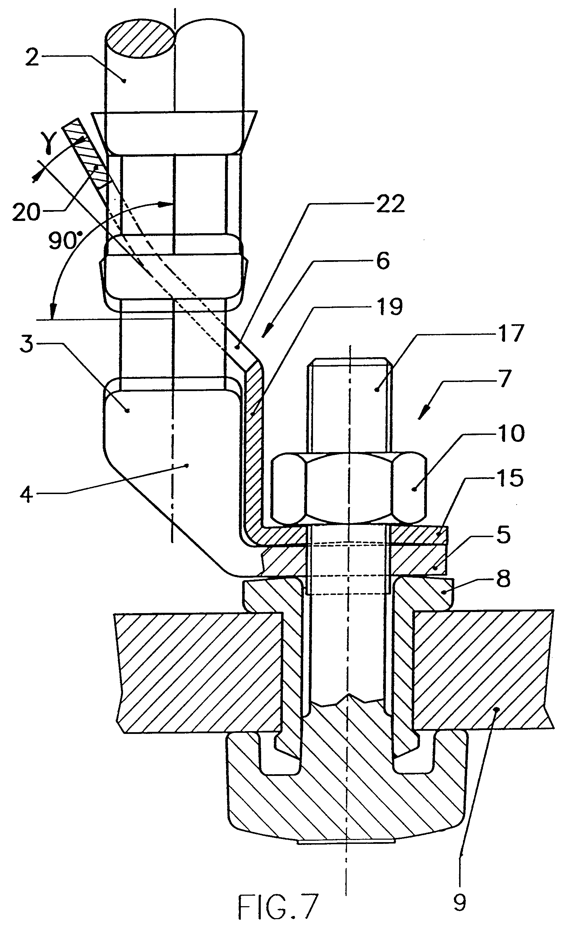

Der Figur 7 kann ein Kabelschuh 1 entnommen werden, der einen Anschlußwinkel von 90° einschließt.

Dem Kabelschuh 1 ist ein elastischer Bügel zugeordnet, der Z-förmig ausgebildet ist und gesamthaft mit 6 gekennzeichnet ist.

Der elastische Bügel 6 weist eine Form auf, die dem Verlauf des Kabelschuhes 1, wie noch genauer beschrieben, entspricht.

Der elastische Bügel 6 ist am Kabelschuh 1 unter Verwendung einer Schraube 7 festgelegt mit der der Kabelschuh mit einer Kontaktplatte oder einer Kontakthülse 8 verbunden wird, die in den Steg 9 des Schienenkörpers eingesetzt ist.

In den Figuren 1 und 4 ist die Mutter 10 der Schraube 7 in nicht angezogener Stellung dargestellt. Aus diesem Grunde ist der elastische Bügel 6 auch nicht vorgespannt und gegenüber dem Kabelschuh 1 verschoben.

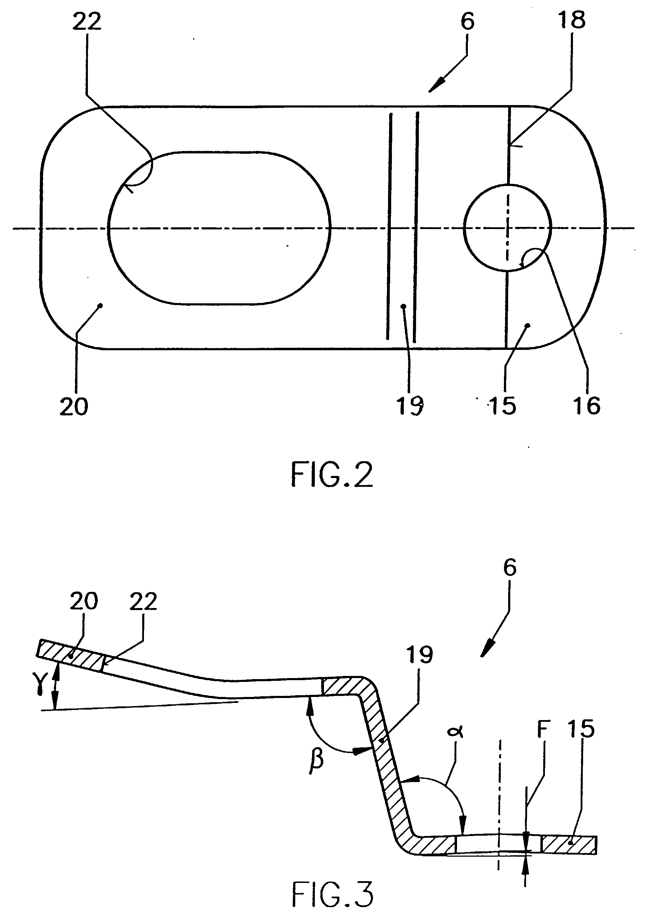

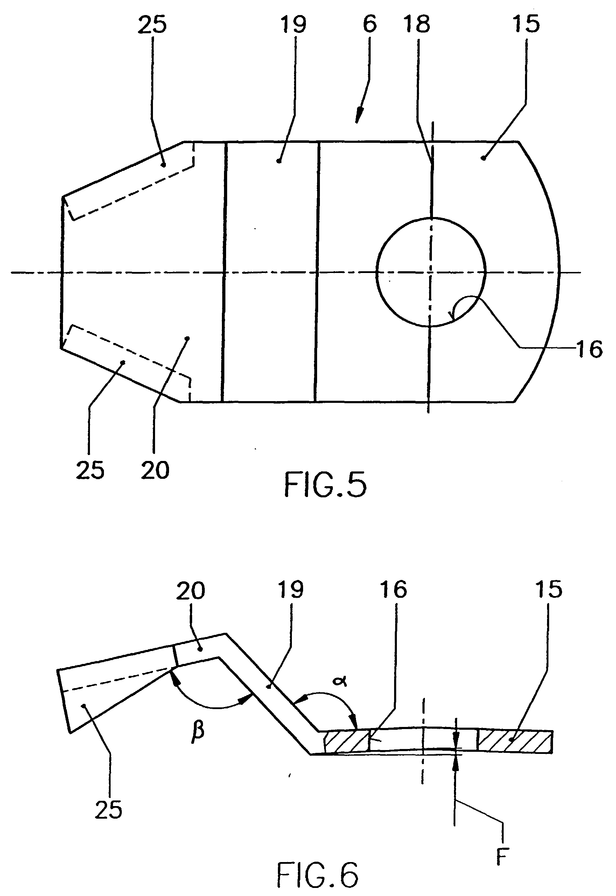

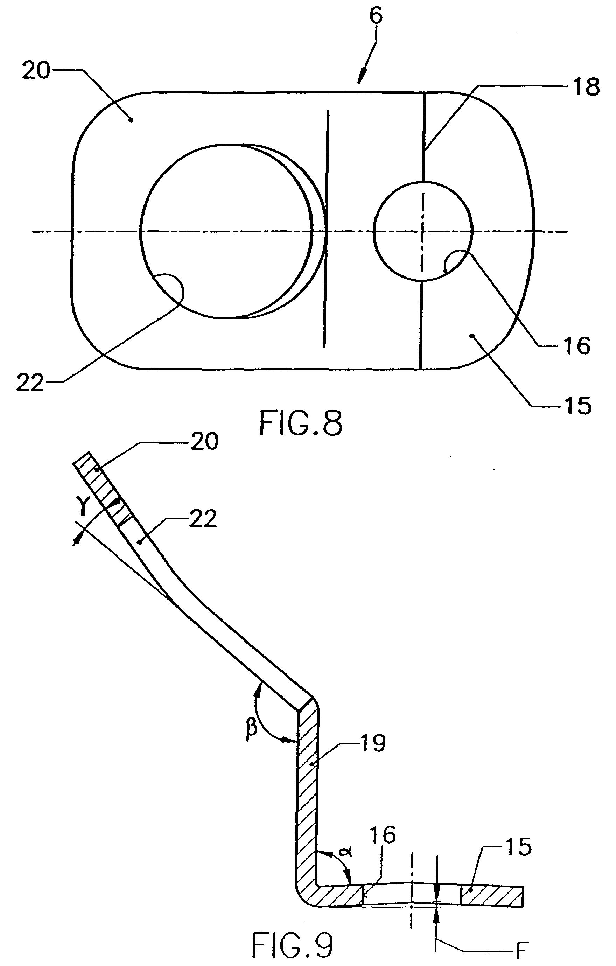

Wie den Figuren 2, 3, 5, 6, 8 und 9 zu entnehmen ist, weist der elastische Bügel 6 eine Grundplatte 15 auf.

Die Grundplatte 15 nimmt eine Bohrung 16, auf in die die Schraube 7, die mit der Mutter 10 zusammenarbeitet, einführbar ist.

In vorteilhafter Weise hat die Grundplatte 15 zwei Längserstreckungen, die Y-förmig ausgebildet sind und eine seitlich offene Ausnehmung festlegen, die die Schraube 7, die mit der Mutter 10 zusammenarbeitet, aufnimmt.

Ein weiterer Vorteil der Erfindung ist darin zu sehen, daß die Grundplatte 15 konvex ausgebildet ist. Wäre die Grundplatte 15 am Kabelschuh 1 angebracht, so wäre der konvexe Teil der Platte auf die Anschlußlasche 5 des Kabelschuhes 1 gerichtet.

In vorteilhafter Weise weist die Grundplatte 15 eine quer angeordnete V-förmige Verformung auf, die in Figur 2 mit der Linie 18 dargestellt ist.

In vorteilhafter Weise ist die Kante des Winkels, der die V-förmige Verformung festlegt, abgerundet.

Die Grundplatte 15 ist gekrümmt ausgebildet und wirkt federnd einem Spannen der Mutter 10 entgegen, wobei die Schraube 7 entsprechend dem Ausmaß der Verformung der konvex ausgebildeten Grundplatte 15 vorgespannt wird.

Die Vorspannwirkung auf die Mutter 10 der Schraube 7 wird durch Zusammenpressen der gekrümmt oder konvex ausgeführten Grundplatte 15 erreicht und ist proportional dem Ausmaß des Pfeiles (F) mit dem die Grundplatte 15 auf die obere Fläche der Anschlußzunge 5 gepreßt wird.

Von der Grundplatte 15 steht ein Hebelarm 19 ab.

Die Verformung des Hebelarmes 19 gegenüber der Anschlußlasche 15, wie in den Zeichnungen durch den Winkel (α) verdeutlicht, ist abhängig von der Ausführungsform des Kabelschuhes 1 dem der elastische Bügel 6 zugeordnet ist, besonders in Abhängigkeit vom Anschlußwinkel des elektrischen Leiters 2 am Steg des Schienenkörpers 9.

Im Ausführungsbeispiel nach Figur 1 und 4, wo der Kabelschuh einen Anschlußwinkel des elektrischen Leiters 2 von 45° einschließt und flach gegenüber der Ebene des Schienenkörpers 9 verläuft, kann der Biegewinkel (α) des Hebelarmes 1 z.B. 105° bzw. 135° betragen.

Am Ende des Bauteiles,das der Grundplatte gegenüberliegt, vereint sich der Hebelarm 19 mit einer Gegendruckplatte 20; diese Platte 20 ist vorspannbar und mit dem rohrförmigen Teil 3 des Kabelschuhes 1 verbindbar.

Die Platte 20 ist gegenüber der Ebene, die den Hebelarm 19 aufnimmt, zur gegenüberliegenden Seite der Grundplatte 15 hin abgebogen.

Auch das Ausmaß der Abbiegung der Platte 20 gegenüber dem Hebelarm 19, in der Zeichnung mit dem Winkel (β) dargestellt, ist abhängig von der spezifischen Ausführungsform des Kabelschuhes 1, dem der elastische Bügel 6 zugeordnet werden soll.

In den dargestellten Beispielen ist der Biegewinkel (β) der Platte 20, z.B. in einer Größenordnung von 103°, 123° und 135° für einen Kabelschuh mit einem Anschlußwinkel von 135°, 90°, oder Flachausführung ausgebildet.

Aufgrund der sich gegenüberstehenden Biegung (α, β) der Grundplatte 15 und der Platte 20 gegenüber dem Hebelarm 19, ist der elastische Bügel 6 Z-förmig gebogen oder winkelartig oder S-förmig verformt.

In den dargestellten Beispielen ist der elastische Bügel 6 derartig ausgebildet, daß er dem Übergangsprofil 4 des Kabelschuhes folgt.

In vorteilhafter Weise kann der Hebelarm 19 unterschiedliche Form und unterschiedliche Biegung gegenüber der Grundplatte 15 und der Platte 20 aufweisen. Es genügt, daß eine Übertragung der Kraft beim Anziehen der Mutter 10, die auf die Grundplatte 15 einwirkt, auf die Platte 20 erfolgt und diese kraftschlüssig mit dem rohrförmigen Teil verbindet. Sofern der Anschlußwinkel des elektrischen Leiters 2 unterschiedlich von einem flachen Winkel (Figur 1 und 7) ist, weist die Platte 20 eine durchgehende Bohrung auf, die eine ovale Ausnehmung 22 begrenzt in die der rohrförmige Körper 3 des Kabelschuhes 1 eintritt.

Die ovale Ausnehmung 22 umgibt den rohrförmigen Körper 3.

Die Platte 20 weist eine Wölbung auf, die sich in Längstrichtung der Platte erstreckt.

Die konkave Seite der sich in Längstrichtung erstreckenden Wölbung ist auf das Ende des rohrförmigen Bauteiles, das den elektrischen Leiter 2 aufnimmt, gerichtet.

So ist die sich z.B. in Längsrichtung erstreckende Wölbung der Platte 20 durch ein V-förmiges Abbiegen (mit abgerundeter Kante) des freien Endes der Platte 20 herstellbar. Die Platte 20 weist eine konkave Seite auf, die dem Ende des rohrförmigen Körpers 3 für den Anschluss des elektrischen Leiters 2 zugeordnet ist.

Das Ausmaß der Biegung ist in den Zeichnungen durch den Winkel (γ) dargestellt.

Das freie Ende der Platte 20 ist von der gegenüberliegenden Seite des Hebelarmes 18 um 15° abgebogen.

In vorteilhafter Weise ist bei geradlinig ausgeführtem Kabelschuh (mit einem flachen Anschlußwinkel) die vorspannbare Platte 20 mit einer querliegenden Wölbung versehen, die an der Oberseite den rohrförmigen Körper 3 (Figur 4) umgibt. Die Platte 20 verjüngt sich in Richtung ihres freien Endes. Entlang der Längsränder sind Verlängerungen 25 vorgesehen, die senkrecht zur Ebene der Platte 20 angeordnet sind. In vorteilhafter Weise liegt der rohrförmige Körper 3 des geraden Kabelschuhes 1, sobald dieser am Schienensteg 9 anliegt, auf einer Verdickung 27 oder direkt an der Seite des Schienensteges 9 an.

Die Platte 20, sofern diese durch das Anziehen der Mutter 10 vorgespannt wird, legt sich kraftschlüssig an den rohrförmigen Körper 3 an und schafft einen engen Kontakt zu dem rohrförmigen Körper 3.Der Kontakt hält so lange an bis die Belastung (Ausmaß der Schwingbelastung des elektrischen Leiters 2 und des mit diesem verbundenen rohrförmigen Körper 3) die Vorspannkraft nicht übersteigt.

Somit wird die einwandfrei Arbeitsweise des elastischen Bügels 6 nicht negativ bei Fehlen einer Gegenwirkung durch den rohrförmigen Körper 3 über die Verdickung 27 oder die seitliche Fläche des Steges des Rohrkörpers 9 beeinflußt.

In vorteilhafter Weise besteht der elastische Bügel 6 aus Stahl, vorzugsweise aus Federstahl.

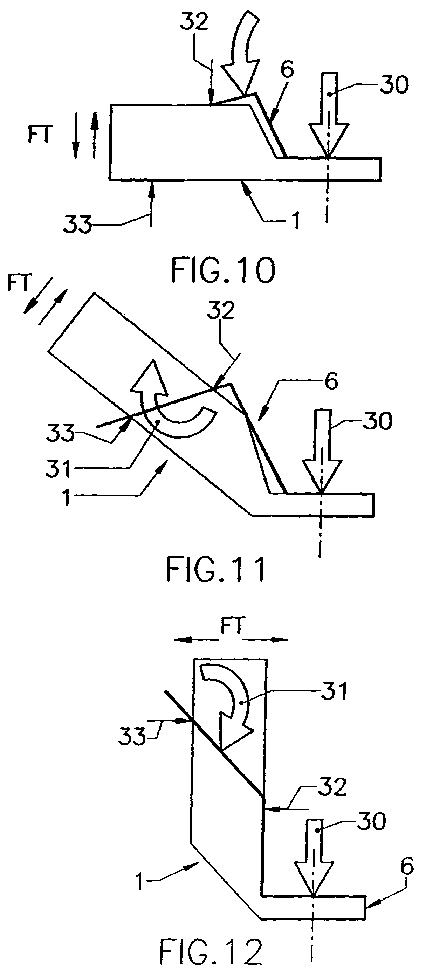

Im Anschluß wird die Funktionsweise der erfindungsgemäßen Vorrichtung anhand der Figuren 10, 11 und 12 genauer beschrieben.

Der elastische Bügel 6 wird dem Kabelschuh 1 zugeordnet, dabei wird der rohrförmige Körper 3 in die ovale Ausnehmung 22 der Platte 20 eingeführt und der Hebelarm 19 und die Grundplatte 15 am Übergangstück 4, bzw. der Anschlußlasche 5 des Kabelschuhes 1 angelegt.

Bei gerade ausgebildetem Kabelschuh 1 wird der elastische Hebel 6 einfach neben dem Kabelschuh 1 angeordnet.

Der Kabelschuh 1 mit zugeordnetem elastischen Bügel 6 wird über die Schraube 7 an die Kontaktplatte oder an die Kontakthülse 8, die am Steg der Schiene 9 angeordnet ist, angedrückt.

Durch Anziehen der Mutter 10 an der Schraube 7 wird die Grundplatte 15 elastisch verformt, solange bis sie an der oberen Seite der Anschlußlasche 5 anliegt. Über den Hebelarm 19 wird die elastische Verformung der Grundplatte 15 auf die Platte 20 übertragen. Die vom Hebelarm 19 übertragene Kraft legt ein Moment 31 frei, das zu einem Vorspannen der Platte 20 am rohrförmigen Körpers des Kabelschuhes führt. Auf diese Weise wird die Platte 20 kraftschlüssig mit dem rohrförmigen Körper 3 verbunden. Im Falle eines geraden Kabelschuhes 1 umgibt die Platte 20 an ihre Oberseite den rohrförmigen Körper 3 in senkrechter Richtung.

Bei Anordnung eines Kabelschuhes mit einem Winkel der unterschiedlich von der flachen Ausführungsform ist, wird die Platte 20 mit der ovalen Ausnehmung 22 aufgrund des Spannvorganges durch ein Anziehen der Mutter 10 (Vorgang der durch den Pfeil 30 angedeutet ist) einem Drehmoment 31 ausgesetzt, das quer zur Achse des rohrförmigen Körpers 3 liegt und eine Drehung im Uhrzeigersinn der Platte 20 einleitet. Aufgrund der Drehung im Uhrzeigersinn liegen die sich gegenüberliegenden Seiten der ovalen Ausnehmung 22 unter Vorspannung am rohrförmigen Körper 3 an.

Die Arbeitsweise des elastischen Bügels während einer hin- und hergehenden schwingenden Bewegung des Schienenkörpers die auf den elektrischen Leiter übertragen wird, wird im Anschluß am Beispiel einer schwingenden Belastung vom elektrischen Leiter auf den Kabelschuh, (Aufschlagen des elektrischen Leiters auf der Schotterschicht der Bahnlinie), dargestellt.

Die vom elektrischen Leiter 2 abgegebene Kraft (FT), die an den rohrförmigen Körper 3 des Kabelschuhes 1 übertragen ist, wird vom elastischen Bügel (β) an einem Berührungspunkt und von der Platte 20 aufgenommen (Pfeile 32 und 33).

Auf diese Weise werden die Flußlinien aufgrund der eintretenden Belastung, welchen der Kabelschuh 1 ausgesetzt ist, teilweise über die Kontaktpunkte (Pfeile 32, 33) in den elastischen Bügel 6 und die Schraube 7 eingeleitet.

Aus diesem Grunde ist die Belastung des Kabelschuhes 1, dem der elastiche Bügel 6 zugeordnet ist, wesentlich vermindert, dies besonders im Übergangsbereich 4, welche besonderen Scherwirkungen ausgesetzt ist.

## Patentansprüche

1. Kabelschuh (1)zur Aufnahme eines elektrischen Leiters(2), der unter Verwendung einer Schraubverbindung (7,10) anbringbar und montierbar ist, **dadurch gekennzeichnet,** daß dem Kabelschuh (1) ein elastischer Z-Förmiger Bügel (6) zugeordnet ist, daß der elastische Bügel (6) eine Grundplatte (15) aufweist, die zwischen der Anschlußlasche (5) des Kabelschuhes (1) und der Spannmutter (10) der Schraube 7 angeordnet ist, daß von der Grundplatte (15) des Bügels (6) ein elastisch verformbarer Hebelarm (19) absteht und der Hebelarm (19) in eine vorspannbare Kontrastplatte (20) übergeht, die am rohrförmigen Körper (3) des Kabelschuhes (1) anliegt.

2. Vorrichtung, nach Patentanspruch 1, **dadurch gekennzeichnet,** daß die Grundplatte (15) eine Bohrung (16) zur Aufnahme einer Schraube (7) aufweist.

3. Vorrichtung, nach Patentanspruch 1, **dadurch gekennzeichnet,** daß die Grundplatte (15) zwei Y-förmige Längserstreckungen aufweist, die eine seitlich offene Aufnehmung begrenzen in die der Schaft (17) der Schraube (7) einführbar ist.

4. Vorrichtung, nach Patentanspruch 1, **dadurch gekennzeichnet,** daß die Grundplatte (15) konvex ausgebildet ist und auf das konvex ausgebildete Teil der Anschlußlasche (5) des Kabelschuhes (1) gerichtet ist.

5. Vorrichtung, nach Patentanspruch 1, **dadurch gekennzeichnet,** daß die Grundplatte (15) in Querrichtung V-förmig abgebogen ist und die konkave Seite auf die Anschlußlasche (5) des Kabelschuhes (1) gerichtet ist.

6. Vorrichtung, nach Patentanspruch 1, **dadurch gekennzeichnet,** daß die vorspannbare Platte (20) eine sich in Querrichtung erstreckende Wölbung aufweist, die den rohrförmigen Körper (3) des Kabelschuhes (1) umgibt an seiner Oberseite umgibt.

7. Vorrichtung, nach Patentanspruch 1, **dadurch gekennzeichnet,** daß die vorspannbare Platte (20) eine ovale Ausnehmung (22) aufweist, die den rohrförmigen Körper (3) des Kabelschuhes (1) aufnimmt.

8. Vorrichtung, nach Patentanspruch 1, **dadurch gekennzeichnet,** daß die vorspannbare Platte (20) eine sich in Längsrichtung erstreckende Wölbung aufweist und diese Wölbung mit der konkaven Seite auf das Ende des rohrförmigen Körpers (3) zur Aufnahme des elektrischen Leiters (2) gerichtet ist.

9. Vorrichtung, nach Patentanspruch 1, **dadurch gekennzeichnet,** daß die vorspannbare Platte (20) in Querrichtung V-förmig gebogen ist und die konkav ausgebildete Seite dem Ende des rohrförmigen Körpers (3) zur Aufnahme des elektrischen Leiters (2) zugeordnet ist.

10. Vorrichtung, nach Patentanspruch 1, **dadurch gekennzeichnet,** daß der elastische Bügel (6) aus Federstahl besteht.
